# EUROPEAN PATENT SPECIFICATION

(11) **EP 3 757 969 B1**
(45) Date of publication and mention of the grant of the patent: **04.06.2025**
(21) Application number: 20171497.9
(22) Date of filing: 27.04.2020
(51) Int. Cl.: G08G 5/00

(54) **VERIFYING FLIGHT INFORMATION**
ÜBERPRÜFUNG VON FLUGINFORMATIONEN
VÉRIFICATION D'INFORMATIONS DE VOL

(30) Priority: 24.06.2019 US 201916450643
(43) Date of publication of application: 30.12.2020
(73) Proprietor: The Boeing Company, Arlington, VA 22202 (US)
(72) Inventor: BAILEY, Louis J., Chicago, IL 60606-2016 (US)
(74) Representative: Boult Wade Tennant LLP

(56) References cited:
- EP-A1- 3 101 820
- US-A1- 2013 085 669
- US-A1- 2015 081 137
- US-A1- 2015 081 138
- US-A1- 2017 039 858
- US-B1- 8 630 790

## Description

### FIELD

This disclosure relates generally to aircraft, and more particularly to verifying flight information for the aircraft during the aircraft's flight.

### BACKGROUND

Aircraft may be equipped with a computer system or a system of computers that controls portions of the aircraft's flight. During flight, various data may be provided to the computer system to maintain or adjust the aircraft's flight.

US2017/0039858 A1, according to its abstract, states that a method for detecting noncompliance with aviation regulations and operating procedures is described. The method analyzes communication associated with a host aircraft to identify key information, stores the identified key information in a data storage device, and determines whether a particular aviation regulation or operating procedure applies to the host aircraft. After determining that a regulation or operating procedure applies, the stored key information is compared against reference information maintained in a database in association with the regulation or operating procedure. An alert is generated when the comparing detects a discrepancy between the stored key information and the reference information.

US 2013/0085669 A1, according to its abstract, states that systems and methods for processing flight information are described. Using a flight plan/route message and other flight information (aircraft type and navigation database information), the portion of the message containing the flight plan or route is decoded and translated to construct a ground-based flight route comprising a list of waypoints and associated flight information. The list of waypoints may then be used in calculations performed by a flight trajectory predictor to identify spatially associated weather information and/or to create an updated flight plan or route (e.g., by adding or changing waypoints in a flight object) and thereafter transmit that information to users. Prior to transmitting any updated flight plan/route, the associated waypoints and other flight information must be translated and encoded into the required format for inclusion in an outgoing (i.e., uplinked) flight plan/route message.

US 2015/081138 A1, according to its abstract, states that aircraft systems and methods for detecting non-compliant pilot action are provided. The method comprises analyzing an outbound communication from an aircraft to recognize a word or phrase corresponding to a parameter associated with a prior request for pilot action. If the word or phrase is recognized, the method further comprises storing data corresponding to the outbound communication in a data storage device. The stored data and pilot action taken are compared to determine if there is a discrepancy between the pilot action and the stored data. A discrepancy alert is outputted if the discrepancy is determined to exist. A predetermined time interval is timed from the outbound communication. A timeout alert is outputted at a timeout of the predetermined time interval unless the requested pilot action is taken within the predetermined time interval.

US 2015/081137A1, in accordance with its abstract, states that a system and method for validating data entry in response to an instruction received in an aircraft cockpit includes receiving, in an aircraft cockpit, an instruction that requires an aircraft pilot to manually enter a target value into an avionics system using an avionics system user interface. The received instruction is processed to determine the target value that should be set by the aircraft pilot using the avionics system user interface. Haptic feedback is to the avionics system user interface during the manual entry by the aircraft pilot.

US 8 630 790 B1, in accordance with its abstract, states that there are systems and methods for receiving flight messages relating to a particular flight from multiple sources and processing information in those flight messages to create a single representation of an updated current and intended trajectory of such flight.

### SUMMARY

The subject matter of the present application has been developed in response to the present state of the art. Accordingly, the subject matter of the present application has been developed to verify flight information for a flight.

A first aspect of the presently claimed invention relates to a method for verifying flight information, comprising: retrieving a first message comprising flight information that is input into a flight information system for an aircraft, wherein the flight information comprises status information that is tracked from a ground-based computer and/or messaging service comprising one or more of: an amount of fuel remaining, a weight of the aircraft, a wind speed, an air pressure reading, and/or the speed of the aircraft, and wherein the flight information system uses the flight information to maintain or adjust flight settings for the aircraft; querying, subsequent to the flight information in the first message being input into the flight information system for the aircraft, the flight information system for the flight information that was inputted into the flight information system; receiving a second message comprising the queried flight information associated with the flight that has been input into the flight information system based on the first message; verifying that the flight information in the first message does not match the flight information in the second message when the flight information in the second message is not within a predetermined threshold of the flight information in the first message; and providing a notification in response to verifying that the flight information in the first message does not match the flight information in the second message, the notification comprising times that the messages were sent and a status of the aircraft when the messages were sent. The preceding subject matter of this paragraph characterizes example 1 of the present disclosure.

In an embodiment, the flight information further comprises at least one of: (i) commands or actions, such as commands to reduce or increase the aircraft's speed, commands to increase or reduce the aircraft's altitude; and/or (ii) performance initialization data and/or takeoff reference data.

In a further embodiment, the first message and the second message comprise different format types such that the first message and the second message are parsed to identify the flight information in each message for verification.

In a further embodiment, verification comprises comparing the flight information of the first message and the second message based on the formats of the first message and the second message to determine if the flight information of the first message and the second message match.

In a further embodiment, the comparison of the flight information between the first message and the second message is performed on one or more of a per-bit basis, a per-byte basis, a per-character basis, a per-data-field basis, and a per-message basis.

In a further embodiment, the flight information that is sent in the first message is inputted into the flight information system in response to one of when the first message is received and when a user approves inputting the flight information.

In a further embodiment, the method further comprises detecting an input event in response to the flight information in the first message being input into the flight information system. The first message is retrieved, and the flight information is received in the second message, in response to the input event.

In a further embodiment, a type and delivery method of the notification that is provided is determined based on a significance of the flight information that is input into the flight information system and that does not match the flight information sent in the first message.

In a further embodiment, the notification is provided as one or more of a push notification for a mobile application, a text message, an email message, a website, and a web service.

In a further embodiment, one of the first message and the second message comprises an aircraft communications addressing and reporting system ("ACARS") message format.

In a further embodiment, the second message is published and broadcast to systems that subscribed to receive messages that comprise flight information that is input into the flight information system.

In a further embodiment, the step of verifying that the flight information in the first message does not match the flight information in the second message comprises: comparing the flight information in the first message to the flight information in the second message to determine if the flight information matches; and storing the compared messages, a comparison result, and/or other properties of the message, including a percent that the flight information in the first message matches the flight information in the second message.

A second aspect of the presently claimed invention relates to a computer apparatus according to appended claim 15.

Another aspect of the presently claimed invention concerns a computer readable medium according to appended claim 14.

Another aspect of the presently claimed invention concerns a computer program according to claim 13.

The described features, structures, advantages, and/or characteristics of the subject matter of the present disclosure may be combined in any suitable manner in one or more examples and/or implementations. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example or implementation. In other instances, additional features and advantages may be recognized in certain examples and/or implementations that may not be present in all examples or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the presently claimed invention may be more readily understood, a more particular description of the presently claimed invention briefly described above will be rendered by reference to specific examples that are illustrated in the appended drawings. Understanding that these drawings depict only typical examples of the presently claimed invention and are not therefore to be considered to be limiting of its scope which is defined by the appended claims, the presently claimed invention will be described and explained with additional specificity and detail through the use of the drawings, in which:
Figure 1 is a schematic block diagram of a system for verifying flight information, according to one or more examples of the present disclosure;
Figure 2 is a schematic block diagram of an apparatus for verifying flight information, according to one or more examples of the present disclosure;
Figure 3A illustrates a system for verifying flight information, according to one or more examples of the present disclosure;
Figure 3B illustrates another system for verifying flight information, according to one or more examples of the present disclosure;
Figure 4 is a schematic flow diagram of a method for verifying flight information, according to one or more examples of the present disclosure; and
Figure 5 is a schematic flow diagram of a method for verifying flight information, according to one or more examples of the present disclosure

### DETAILED DESCRIPTION

Reference throughout this specification to "one example," "an example," or similar language means that a particular feature, structure, or characteristic described in connection with the example is included in at least one example of the present disclosure. Appearances of the phrases "in one example", "in an example", and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

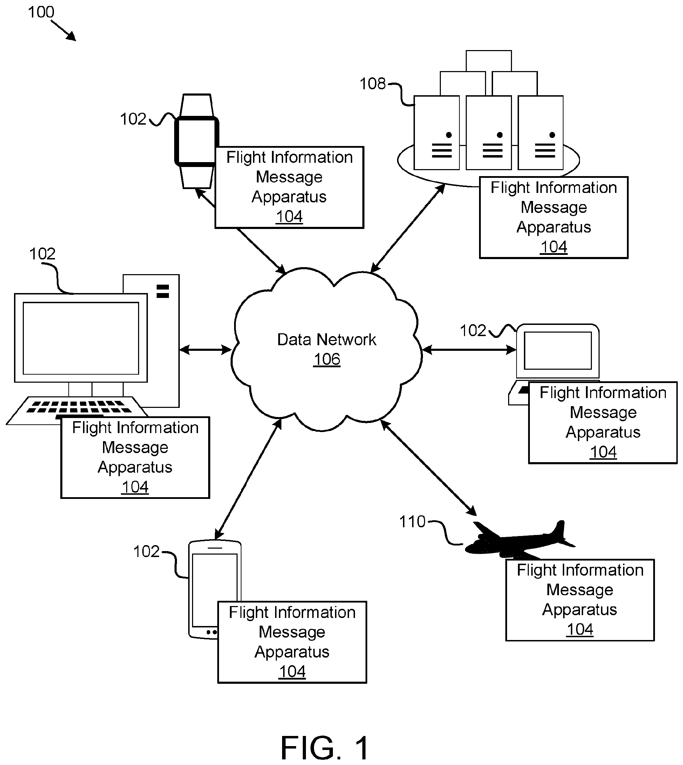

Figure 1 is a schematic block diagram illustrating one example of a system 100 for verifying flight information. The system 100 includes one or more information handling devices 102, one or more message apparatuses 104, one or more data networks 106, one or more servers 108, and one or more aircraft 110. Even though a specific number of information handling devices 102, message apparatuses 104, data networks 106, one or more servers 108, and aircraft 110 are depicted in Figure 1, one of skill in the art will recognize, in light of this disclosure, that any number of information handling devices 102, message apparatuses 104, data networks 106, servers 108, and aircraft 110 may be included in the system 100.

The information handling devices 102 of the system 100 may include one or more of a desktop computer, a laptop computer, a tablet computer, a smart phone, a smart speaker (e.g., Amazon Echo^{®}, Google Home^{®}, Apple HomePod^{®}), a security system, a set-top box, a gaming console, a smart TV, a smart watch, a fitness band or other wearable activity tracking device, an optical head-mounted display (e.g., a virtual reality headset, smart glasses, or the like), a High-Definition Multimedia Interface ("HDMI") or other electronic display dongle, a personal digital assistant, a digital camera, a video camera, or another computing device comprising a processor (e.g., a central processing unit ("CPU"), a processor core, a field programmable gate array ("FPGA") or other programmable logic, an application specific integrated circuit ("ASIC"), a controller, a microcontroller, and/or another semiconductor integrated circuit device), a volatile memory, and/or a non-volatile storage medium.

In certain examples, the information handling devices 102 are communicatively coupled to one or more other information handling devices 102 and may be located on the aircraft 110, one or more servers 108, and/or one or more aircraft 110 over the data network 106, described below. The information handling devices 102 may include processors, processor cores, and/or the like that are configured to execute various programs, program code, systems, applications, instructions, functions, and/or the like for sending and receiving messages, comparing information, storing and querying data in databases, and/or the like.

In some examples, the flight information message apparatus 104 is configured to retrieve a first message sent to flight information system such as a flight management system for an aircraft 110. The first message may include flight information that is input into a flight information system. In further examples, the flight information message apparatus 104 receives flight information that is input into the flight information system associated with the flight based on the first message. The flight information from the flight information system may be received in a second message. The flight information message apparatus 104, in certain examples, verifies that the flight information that is sent in the first message matches the flight information that is received in the second message, and provides a notification in response to verifying or determining that the flight information in the first and second messages does not match. In this manner, the flight information message apparatus 104 can verify that flight information, including important flight information, is being received and correctly entered into the flight information system and provide timely alerts or notifications to other interested, subscribed, or registered systems via data network 106 if it is not.

In various examples, the flight information message apparatus 104 is located on an aircraft 110 as part of a flight information system or other computing system associated with the aircraft 110, is located on a ground-based computing system, and/or some combination of both. The flight information message apparatus 104, in some examples, is embodied as a hardware appliance that can be installed or deployed on an information handling device 102, on a server 108, on an aircraft 110, and/or elsewhere on the data network 106. In certain examples, the flight information message apparatus 104 includes a hardware device such as a secure hardware dongle or other hardware appliance device (e.g., a set-top box, a network appliance, or the like) that attaches to a device, a laptop computer, a server 108, a tablet computer, a smart phone, a security system, or the like, either by a wired connection (e.g., a universal serial bus ("USB") connection) or a wireless connection (e.g., Bluetooth^{®}, Wi-Fi, near-field communication ("NFC"), or the like); that attaches to an electronic display device (e.g., a television or monitor using an HDMI port, a DisplayPort port, a Mini DisplayPort port, VGA port, DVI port, or the like); and/or the like. A hardware appliance of the flight information message apparatus 104 includes a power interface, a wired and/or wireless network interface, a graphical interface that attaches to a display, and/or a semiconductor integrated circuit device as described below, configured to perform the functions described herein with regard to the flight information message apparatus 104.

The flight information message apparatus 104 includes a semiconductor integrated circuit device (e.g., one or more chips, die, or other discrete logic hardware), or the like, such as a field-programmable gate array ("FPGA") or other programmable logic, firmware for an FPGA or other programmable logic, microcode for execution on a microcontroller, an application-specific integrated circuit ("ASIC"), a processor, a processor core, or the like, in some examples. In some examples, the message apparatus 104 is mounted on a printed circuit board with one or more electrical lines or connections (e.g., to volatile memory, a non-volatile storage medium, a network interface, a peripheral device, a graphical/display interface, or the like). The hardware appliance includes one or more pins, pads, or other electrical connections configured to send and receive data (e.g., in communication with one or more electrical lines of a printed circuit board or the like), and one or more hardware circuits and/or other electrical circuits configured to perform various functions of the flight information message apparatus 104 in some examples.

The semiconductor integrated circuit device or other hardware appliance of the flight information message apparatus 104, in certain examples, includes and/or is communicatively coupled to one or more volatile memory media, which may include but is not limited to random access memory ("RAM"), dynamic RAM ("DRAM"), cache, or the like. In some examples, the semiconductor integrated circuit device or other hardware appliance of the flight information message apparatus104 includes and/or is communicatively coupled to one or more non-volatile memory media, which may include but is not limited to: NAND flash memory, NOR flash memory, nano random access memory (nano RAM or NRAM), nanocrystal wire-based memory, silicon-oxide based sub-10 nanometer process memory, graphene memory, Silicon-Oxide-Nitride-Oxide-Silicon ("SONOS"), resistive RAM ("RRAM"), programmable metallization cell ("PMC"), conductive-bridging RAM ("CBRAM"), magneto-resistive RAM ("MRAM"), dynamic RAM ("DRAM"), phase change RAM ("PRAM" or "PCM"), magnetic storage media (e.g., hard disk, tape), optical storage media, or the like.

In other examples, the flight information message apparatus 104 may consist of software services and software applications. Flight information message apparatuses, systems, modules, and/or the like may execute in memory on another device and communicate with the illustrated computing systems, flight information systems, aircraft 110, or other information handling devices 102 via inter-computer communications hosted for processing flight messages containing flight information and individual flight information parameters.

The data network 106, in some examples, includes a digital communication network that transmits digital communications. The data network 106 includes a wireless network, such as a wireless cellular network, a local wireless network, such as a Wi-Fi network, a Bluetooth^{®} network, a near-field communication ("NFC") network, an ad hoc network, and/or the like, in certain examples. The data network 106 includes a wide area network ("WAN"), a storage area network ("SAN"), a local area network (LAN), an optical fiber network, the internet, or other digital communication network, in certain examples. In some examples, the data network 106 includes two or more networks. In some examples, the data network 106 includes one or more servers, routers, switches, and/or other networking equipment. In some examples, the data network 106 includes one or more computer readable storage media, such as a hard disk drive, an optical drive, non-volatile memory, RAM, or the like.

The wireless connection is a mobile telephone network in some examples. The wireless connection employs a Wi-Fi network based on any one of the Institute of Electrical and Electronics Engineers ("IEEE") 802.11 standards in some examples. Alternatively, the wireless connection is a Bluetooth^{®} connection in certain examples. In addition, the wireless connection employs a Radio Frequency Identification ("RFID") communication including RFID standards established by the International Organization for Standardization ("ISO"), the International Electrotechnical Commission ("IEC"), the American Society for Testing and Materials^{®} (ASTM^{®}), the DASH7^{™} Alliance, and EPCGlobal^{™} in various examples.

Alternatively, the wireless connection may employ a ZigBee^{®} connection based on the IEEE 802 standard. In some examples, the wireless connection employs a Z-Wave^{®} connection as designed by Sigma Designs^{®}. Alternatively, the wireless connection may employ an ANT^{®} and/or ANT+^{®} connection as defined by Dynastream^{®} Innovations Inc. of Cochrane, Canada.

The wireless connection may be an infrared connection including connections conforming at least to the Infrared Physical Layer Specification ("IrPHY") as defined by the Infrared Data Association^{®} ("IrDA"^{®}). Alternatively, the wireless connection may be a cellular telephone network communication. All standards and/or connection types include the latest version and revision of the standard and/or connection type as of the filing date of this application.

The one or more servers 108, in some examples, are embodied as blade servers, mainframe servers, tower servers, rack servers, and/or the like. The one or more servers 108 are configured as mail servers, web servers, application servers, FTP servers, media servers, data servers, web servers, file servers, virtual servers, and/or the like in some examples. The one or more servers 108 are communicatively coupled (e.g., networked) over a data network 106 to one or more information handling devices 102 in certain examples. The one or more servers 108 stores data in data structures such as databases, data repositories, or the like in some examples.

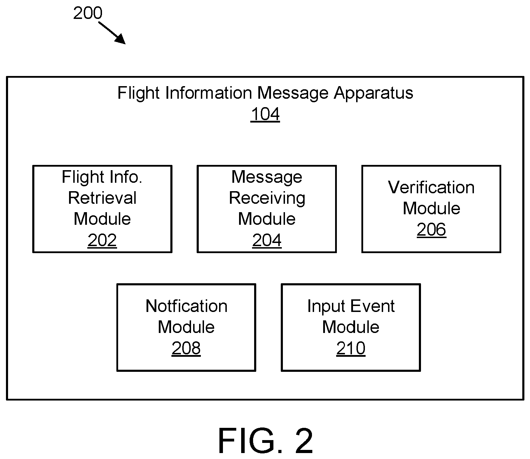

Figure 2 depicts one example of an apparatus 200 for verifying flight information. The apparatus 200 includes an example of the message apparatus 104. The message apparatus 104, in certain implementations, includes one or more of a flight information retrieval module 202, a message receiving module 204, a verification module 206, a notification module 208, and an input event module 210, which are described in more detail below.

The flight information retrieval module 202, in some examples, is configured to retrieve a message that has been, or is being sent to an aircraft 110, such as a commercial airplane, a helicopter, and/or the like, or other flight information system that is associated with an aircraft 110. In some examples, the message is sent from a ground-based message system, a ground-based computing system, a ground-based communication system, and/or the like that is communicatively coupled to the aircraft 110 over a data network 106 such as a cellular data network, a satellite data network, an airband radio transmission network, and/or the like. An example of such a network is the aircraft communications addressing and reporting system ("ACARS"), which is a digital datalink system for transmission of short messages between aircraft 110 and ground stations via airband radio or satellite.

Thus, the message is an electronic message such as a text message, an email message, a short message service ("SMS") message, an ACARS message, and/or another type of electronic message. The electronic message may have a known, predefined, predetermined, or otherwise recognizable format. For example, the flight information that is sent in the message may be located in predefined fields within the message (e.g., there may be a message header field, a message size/length field, a message parity field, and the message payload field, which may be divided into different predefined fields that include codes or other information that the flight management system can partition, read, and implement).

The message, according to the presently claimed invention, includes flight information that is input into a flight information system such as a flight management system of an aircraft 110. As used herein, a flight management system is a specialized computer system that automates a wide variety of in-flight tasks, such as the flight plan. In other examples, the message is sent to various flight information systems such as airline flight planning systems, air traffic processor systems, air traffic control trajectory prediction systems, communication management unit systems, and/or the like. One of skill in the art will recognize, in light of this disclosure, the various information systems that may be associated with flight management for an aircraft 110.

According to the presently claimed invention, the flight information status include status information that is tracked from the ground-based computer and/or messaging service such as an amount of fuel remaining, a weight of the aircraft 110, a wind speed, an air pressure reading, the speed of the aircraft 110, and/or the like, which the flight information system can use to maintain or adjust flight settings for the aircraft 110, e.g., via a flight management system. Other flight information may further include information such as commands or actions, for example, commands to reduce or increase the aircraft's speed, commands to increase or reduce the aircraft's altitude, and/or the like.

The flight information retrieval module 202, in some examples, retrieves the sent message from a storage location at a ground-based computing system (e.g., the message that include flight information that is sent to the aircraft 110). In certain examples, the flight information retrieval module 202 retrieves the sent message from a storage location on an aircraft 110 (e.g., the message that includes flight information that the aircraft 110 receives).

The message receiving module 204, in some examples, is configured to receive a message comprising flight information that is input into the flight information system based on the first message. The flight information that is received in the second message may be received in a different message, which may have the same or different format as the message that included the flight information that was sent to the flight information system, e.g., the message sent to the flight management system of an aircraft 110 may be a sent over a satellite network and the message that is received from the aircraft 110 may be received over an airband radio network.

The message receiving module 204 may query a database, a log file, a system, and/or the like for flight information that has been entered into the flight information system, e.g., the flight management system for the aircraft 110. The message receiving module 204 may check for flight information in response to new flight information being received, entered, or input into the flight information system. For example, a pilot may review the flight information received from a ground-based message service and confirm the flight information before entry into the flight management system and the message receiving module 204 may receive a notification, event, signal, trigger, or the like that indicates new information has been received and entered into the flight management system. In certain examples, flight information may be altered, modified, changed, adjusted, or the like by the pilot, other crew member, a user, or by a different system prior to being input into the flight information system.

The message receiving module 204 may query the flight information system for the information that was received and/or entered in the flight information system. In certain examples, the message receiving module 204 sends the flight information in a message to the ground-based message service for further comparison or analysis, as explained below with reference to the verification module 206. In some examples, the message receiving module 204 sends the queried flight information in a message to a verification module 206 that is part of or in communication with the flight information system for further analysis of the queried flight information (e.g., whether it matches the flight information that was received at the aircraft 110 and/or entered by the pilot/crew member), with the results (e.g., the resultant comparison of whether the flight information that is received/entered matches the flight information that the flight management system is using) being sent to the ground-based message service. In some examples, the flight information is automatically entered into the flight information system in response to a user such as an air traffic controller, the pilot, or other crew member, reviewing and confirming entering the information into the flight information system, which avoids errors that can arise with the information being manually entered into the flight information system.

In certain examples, the message receiving module 204 associates the queried flight information with the message that was received at the flight information system so that the flight information that is received or inputted into the flight information system is mapped to the message that triggered the flight information being inputted into the flight information system. For instance, the message that contains the queried flight information may also include an identifier for the corresponding message that is received at the aircraft 110 such as a unique message identifier, a timestamp of when the message received at the aircraft 110 was sent or received, and/or the like.

In some examples, flight information may be streamed to and/or from a flight information system associated with a flight of an aircraft, such as aircraft 110. In such examples, the flight information retrieval module 202 and the message receiving module 204 are combined, communicatively linked, operatively connected, or the like into a flight information socket (e.g., a network socket) in which flight information is received and queried through a subscription, registration, or the like to send and receive communications over the socket.

For instance, a flight information system may be embodied as a publisher in a publisher/subscriber-based system where the message receiving module 204, other systems, and/or other devices are embodied or configured as subscription systems for messages that comprise flight information that are sent from the flight information system. The flight information system may "publish" a message, e.g., send a message that contains flight information from the flight information system that is then broadcast, streamed, or otherwise transmitted to "subscriber" or registered systems such as the message receiving module 204. In this manner, the message receiving module 204 can receive messages that include flight information in real-time or with minimal delay between when the message is sent and when the message receiving module 204 receives it so that an accurate verification of the flight information that is being used in the flight information system can be performed.

The verification module 206, in some examples, is configured to verify that the flight information in the message that is sent to the flight information system associated with the flight matches the flight information in the message that is received from the flight information system associated with the flight, which may include flight information that is received at the aircraft 110, flight information that is entered into the flight information system (e.g., the flight management system of an aircraft 110), flight information that is queried or received from the flight information system, and/or the like. In other words, the verification module 206 can verify that the flight information is correctly received, entered, sent, or the like. If the verification module 206 determines that the flight information between the messages matches, then the flight information that was sent to the flight information system associated with the flight was correctly entered into the flight information system; otherwise, an error occurred with the data that was input into the flight information system.

In certain examples, the verification module 206 verifies that the flight information in the message that is sent to the flight information system associated with the flight and the flight information that is queried or received from the flight information system associated with the flight (e.g., the flight information that is entered in the flight management system) and sent in a different message from the flight information system matches by comparing the flight information on a per-message basis, a per-data-field basis, a per-word basis, a per-byte basis, a per-bit basis, a per-character basis, and/or the like.

For example, if the message that is sent to the flight information system associated with the flight and the message that is received from the flight information system associated with the flight are of the same type, e.g., an ACARS message, then the verification module 206 may perform a message-to-message compare, or may compare corresponding fields within the messages that include the flight information data, and/or the like. If the messages are of a different type, however, the verification module 206 may need to locate the flight information in the messages so that the flight information can be compared. For instance, the verification module 206 may locate the flight information based on the predefined format of the message (e.g., an ACARS message may store flight information in a predefined field, location, or position within the message). However, if the message does not have a predefined format, the verification module 206 may locate the flight information in the message using text, character, or string processing such as artificial intelligence based on situational context, natural language processing, regular expressions, and/or the like to locate the flight information, the fields where the flight information is located, and/or the like.

In some examples, the verification module 206 determines that the flight information that is received in the message from the flight information system associated with the flight (e.g., the flight information that is queried from the flight management system) matches the flight information that is sent in the message to the flight information system associated with the flight in response to determining that the flight information for both messages is within or satisfies a threshold value, amount, range, or the like. For instance, the ground-based message system may send a message with flight information providing the planned, forecasted, or estimated weight of the aircraft 110 (e.g., 70 tons) and the message received from the flight information system associated with the flight may include a weight value that was actually entered or inputted into the flight management system.

If the verification module 206 determines that the weight values in the messages are not the same, e.g., that the weight value sent to the flight information system associated with the flight does not match the weight value that was received at the flight information system associated with the flight or entered into the flight management system of the aircraft 110, then the verification module 206 may determine whether the weight values are within a predetermined threshold (e.g., ± 100 pounds (± 45 kg)). If so, then the verification module 206 may determine that the flight information is a match and that the flight information that was sent to the flight information system associated with the flight was correctly inputted into the flight information system. Otherwise, the verification module 206 determines that there is a mismatch and incorrect flight information was entered into the flight information system. Other examples of flight information that may be important to verify includes performance initialization data, takeoff reference data, and/or the like.

In some examples, the notification module 208 is configured to provide a notification in response to the verification module 206 verifying that the flight information that is sent in the message to the flight information system associated with the flight does not match the flight information that is received in the message from the flight information system associated with the flight. The notification, for instance, may include a push notification for a mobile application, a text message, an email message, a website posting, a web service, and/or the like.

In certain examples, the type and delivery method of notification that the notification module 208 provides depends on the significance, importance, and/or the like of the flight information. For instance, if the flight information is more important and the verification module 206 determines that the flight information was not input correctly based on the comparison of the messages that are sent to and received from the flight information system associated with the flight, then the notification module 208 may trigger an alert, an alarm, a push notification, or the like that is intended to get a user's attention, e.g., a ground-crew member, a flight traffic controller, or the like by triggering sounds, lights, obstructing the user's display with a message, triggering an emergency call or alert, and/or the like. Otherwise, if the flight information is less important, then the notification module 208 may send a less-obvious or less-distracting notification to the user.

In some examples, the input event module 210 is configured to detect an input event in response to the flight information in the message that is received at the flight information system associated with the flight being input into the flight management system. As described above, the flight information that is received at the flight information system associated with the flight may be input into the flight management system manually by an air traffic controller, a pilot, or other crew member, may be reviewed by an air traffic controller, a pilot, or other crew member and confirmed for automatic input into the flight information system, or may be automatically input into the flight information system without review. The type of feedback that is necessary to input the flight information into the flight information system may depend on the significance, importance, or the like of the flight information, which may be indicated with a flag or other indicator in the message that is received at the flight information system associated with the flight.

In some examples, the flight information system or aircraft 110 may emit a signal, an alert, a notification, an event, and/or the like in response to flight information being input into the flight information system. In response to the event, the input event module 210 triggers the flight information retrieval module 202 to retrieve the message that was sent to the aircraft 110, the message receiving module 204 to query or receive the flight information that was input into the flight information system in response to receiving the message at the flight information system associated with the flight with the flight information, and the verification module 206 to verify that the flight information that was received at the flight information system associated with the flight matches the flight information that was input into the flight information system. Alternatively, or in addition to, in some examples, the input event module 210 is configured to listen to, subscribe to, and/or register to receive and/or queue incoming and/or outgoing messages as they are sent and received, which can be used to verify the flight information.

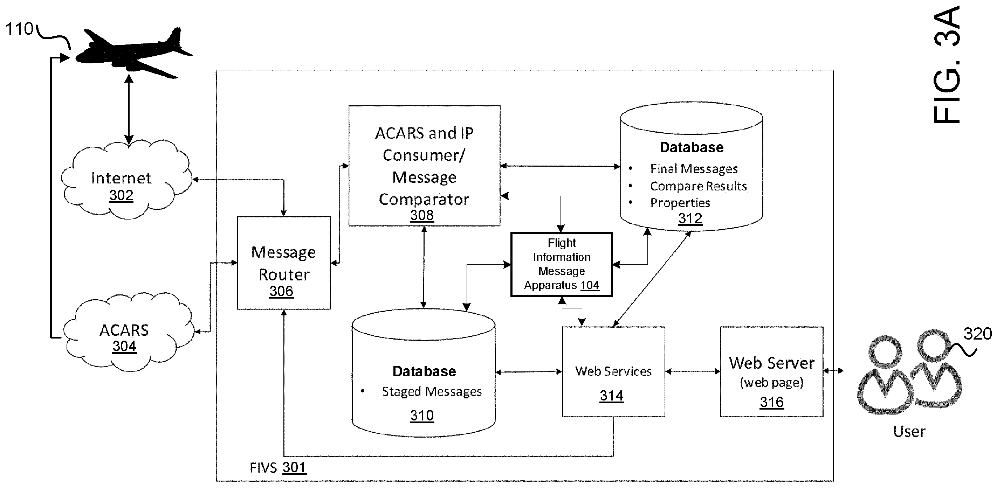

Figure 3A depicts one example of a flight information verification system ("FIVS") 301. In some examples, the FIVS 301 is a ground-based message computing system that is connected to an aircraft 110 via a network such as the Internet (e.g., an Internet protocol network) 302, an ACARS (e.g., satellite or radio airband) network 304, and/or the like. A message router 306 (which may be embodied as or used by the flight information retrieval module 202 and/or the message receiving module 204) may be configured to send messages from the FIVS 301 to an aircraft 110 and/or receive messages at the FIVS 301 from an aircraft 110 over the network 302, 304. The message router 306 may be embodied as a stand-alone device (e.g., a message server) or a hardware and/or software module.

In some examples, the message router 306 may store messages that have been sent, or are queued to be sent, to the aircraft 110 in a database 310 along with an identifier that uniquely identifies the messages. The message router 306 may also store messages received from the aircraft 110 that contain flight information from the flight management system of the aircraft 110 in the database 310, along with an identifier for the received message and also an identifier for the corresponding message that was sent to the aircraft 110. The verification module 206, in some examples, may use or trigger the message comparator 308 (e.g., an IP message or ACARS message comparator) to compare the flight information portions of the message sent to the aircraft 110 and the message received from the aircraft 110 to determine if the flight information matches. The message comparator 308 may store the compared messages, the comparison results, and/or other properties of the messages (e.g., the types of messages, the percent that was a match, whether the flight information was exactly the same or was within a predefined threshold, the importance or significance of the flight information, and/or the like) in an active or temporary data store, such as a database 312.

The notification module 208 may check the comparison results to determine whether to send a notification about the flight information not matching. In some examples, the notification module 208 may provide a message or other information to a web service 314 for presentation to a user 320 on a web page that is served-up by a web server 316. The notification may include whether the information was a match or not, the threshold that was used to determine a match, the significance or importance of the information, the times that the messages were sent, the status (e.g., altitude, speed, etc.) of the aircraft 110 when the messages were sent, and/or the like.

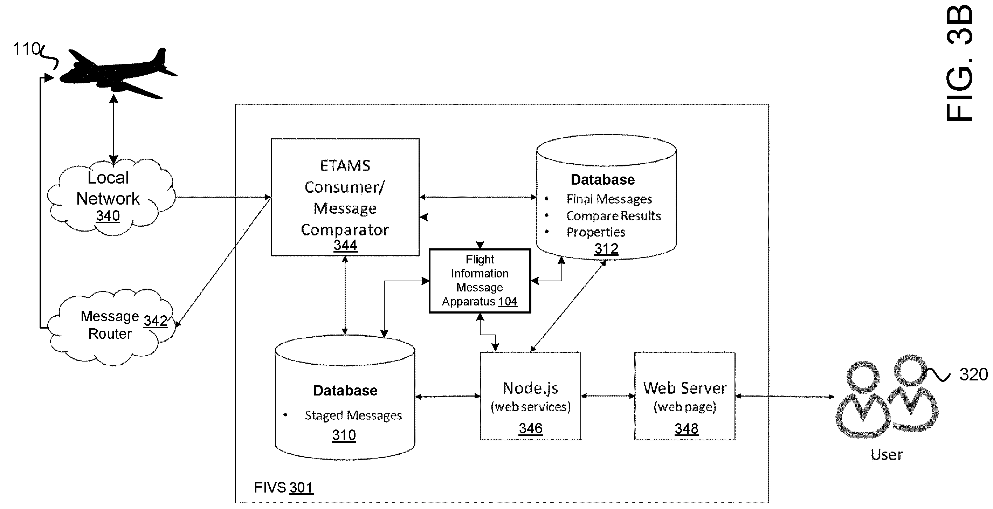

Figure 3B depicts another example of a flight information verification system ("FIVS") 301. Figure 3B is substantially similar to the FIVS 301 described above in Figure 3A. Figure 3B describes a FIVS 301 that is a ground-based message computing system that is connected to an aircraft 110 over a local network 340 and a message router 342 that may be located on the local network 340. As used herein, the local network 340 is configured to handle a plurality of communications protocols (e.g., an Internet, Airline, Air Traffic Control protocols) over a plurality of communication channels (e.g. internet, radio, or satellite networks).

Similar to the FIVS 301 in Figure 3A, a local message comparator 344 may compare flight information for messages sent to the aircraft 110 and corresponding flight information for messages received from the aircraft 110. The results of the comparison may be stored in a database 312, e.g., a relational database such as PostgreSQL^{®}, MySQL^{®}, and/or the like.

The notification module 208, based on the results of the comparison, provides a notification to one or more users 320 via web services 346 such as a web service build on a JavaScript engine. The notification may then be presented to the users 320 via a web page provided by a web server 348.

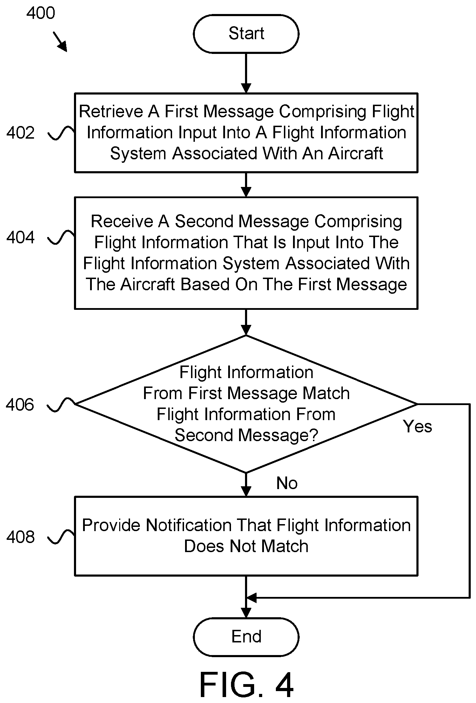

Figure 4 is a schematic flow-chart diagram illustrating one example of a method 400 for verifying flight information. The method 400 begins and retrieves 402 a first message comprising flight information that is input into a flight information system associated with a flight. The method 400 receives 404 a second message comprising flight information that is input into the flight information system associated with the flight based on the first message.

The method 400 determines 406 whether the flight information from the first message matches the flight information from the second message. If yes, then the method 400 ends. Otherwise, the method 400 provides 408 a notification in response to verifying that the flight information that is sent in the first message does not match the flight information that is received in the second message, and the method 400 ends. In some examples, the flight information retrieval module 202, the message receiving module 204, the verification module 206, and the notification module 208 perform the various steps of the method 400.

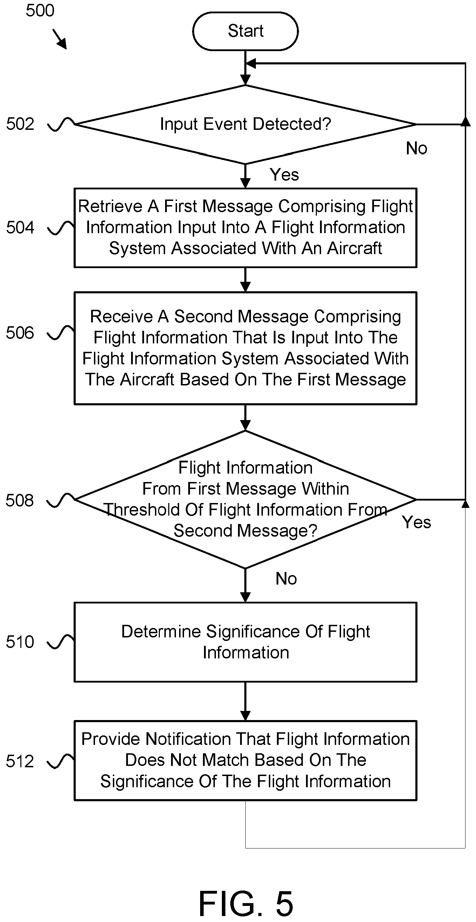

Figure 5 is a schematic flow-chart diagram illustrating one example of a method 500 for verifying flight information. The method 500 begins and determines 502 whether an input event is detected, e.g., whether flight information has been inputted or entered into a flight information system. If not, the method 500 continues to monitor 502 for input events. Otherwise, the method 500 retrieves 504 a first message comprising flight information that is input into a flight information system associated with a flight.

The method 500 receives 506 a second message comprising flight information that is input into the flight information system associated with the flight based on the first message. The method 500 determines 508 whether the flight information from the first message matches the flight information from the second message within a predetermined threshold. If so, the method 500 continues to monitor 502 for input events.

Otherwise, the method determines 510 a significance, importance, or the like of the flight information and/or the mismatch (e.g., the degree or amount of difference) between the flight information from the message sent to the flight information system associated with the flight and the message received from the flight information system associated with the flight. The method 500 provides 512 a notification in response to verifying that the flight information that is sent in the first message does not match the flight information that is received in the second message based on the significance of the flight information and/or the mismatch, and the method 500 ends. In some examples, the flight information retrieval module 202, the message receiving module 204, the verification module 206, the notification module 208, and the input event module 210 perform the various steps of the method 500.

In the above description, certain terms may be used such as "up", "down", "upper", "lower", "horizontal", "vertical", "left", "right", "over", "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including", "comprising", "having", and variations thereof mean "including but not limited to" unless expressly specified otherwise. An enumerated listing of items does not imply that any or all of the items are mutually exclusive and/or mutually inclusive, unless expressly specified otherwise. The terms "a", "an", and "the" also refer to "one or more" unless expressly specified otherwise. Further, the term "plurality" can be defined as "at least two".

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

Conditional language used herein, such as, among others, "can", "could", "might", "may", "e.g." and the like, unless specifically stated otherwise, or otherwise understood within the context as used, is generally intended to convey that certain examples include, while other examples do not include, certain features, elements, and/or steps. Thus, such conditional language is not generally intended to imply that features, elements and/or steps are in any way required for one or more examples or that one or more examples necessarily include logic for deciding, with or without input or prompting, whether these features, elements and/or steps are included or are to be performed in any particular example. Also, the term "or" is used in its inclusive sense (and not in its exclusive sense) so that when used, for example, to connect a list of elements, the term "or" means one, some, or all of the elements in the list.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first", "second", etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of some examples of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

Examples of the various modules may take the form of an entirely hardware example, an entirely software example (including firmware, resident software, micro-code, etc.) or an example combining software and hardware aspects that may all generally be referred to herein as a "circuit", "module" or "system." Furthermore, examples may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In some examples, the storage devices only employ signals for accessing code.

The modules may be implemented as a hardware circuit comprising custom very-large-scale integration (VLSI) circuits or gate arrays, off-the-shelf semiconductors such as logic chips, transistors, or other discrete components. The modules may also be implemented in programmable hardware devices such as field programmable gate arrays, programmable array logic, programmable logic devices or the like.

The modules may also be implemented in code and/or software for execution by various types of processors. An identified module of code may, for instance, comprise one or more physical or logical blocks of executable code which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.
Any combination of one or more computer readable medium may be utilized by the modules. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for examples may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

## Claims

1. A method (400/500) for verifying flight information, comprising:
retrieving (402/504) a first message comprising flight information associated with a flight that is to be input into a flight information system for an aircraft, wherein the flight information comprises status information that is tracked from a ground-based computer and/or messaging service comprising one or more of: an amount of fuel remaining, a weight of the aircraft (110), a wind speed, an air pressure reading, and/or the speed of the aircraft (110), and wherein the flight information system uses the flight information to maintain or adjust flight settings for the aircraft (110);
querying, subsequent to the flight information in the first message being input into the flight information system for the aircraft, the flight information system for the flight information that was inputted into the flight information system;
receiving (404/506) a second message comprising the queried flight information associated with the flight that has been input into the flight information system based on the first message;
verifying (406/508) that the flight information in the first message does not match the flight information in the second message when the flight information in the second message is not within a predetermined threshold of the flight information in the first message; and
providing (408/512) a notification in response to verifying that the flight information in the first message does not match the flight information in the second message, the notification comprising times that the messages were sent and a status of the aircraft when the messages were sent.

2. The method (400/500) according to claim 1, wherein the flight information further comprises at least one of:
(i) commands or actions, such as commands to reduce or increase the aircraft's speed and/or commands to increase or reduce the aircraft's altitude; and/or
(ii) performance initialization data and/or takeoff reference data.

3. The method (400/500) according to any of claims 1-2, wherein the first message and the second message comprise different format types, and wherein the method comprises parsing the first message and the second message to identify the flight information in the first message and the second message before verifying (406/508) that the flight information in the first message does not match the flight information in the second message.

4. The method (400/500) according to claim 3, wherein verifying (406/508) that the flight information in the first message does not match the flight information in the second message comprises comparing the flight information in the first message and the flight information in the second message based on the format types of the first message and the second message to determine if the flight information of the first message and the second message match.

5. The method (400/500) of claim 4, comprising comparing the flight information in the first message and the flight information in the second message on one or more of a per-bit basis, a per-byte basis, a per-character basis, a per-data-field basis, and a per-message basis.

6. The method (400/500) according to any of claims 1-5, comprising inputting the flight information in the first message into the flight information system in response to receiving the first message or when a user approves inputting the flight information.

7. The method (400/500) according to claim 6, further comprising detecting (502) an input event in response to the flight information in the first message being input into the flight information system, and retrieving the first message and receiving the flight information in the second message in response to the input event.

8. The method (400/500) according to any of claims 1-7, comprising determining (510) a type and delivery method of the notification to be provided based on a significance of the flight information in the second message.

9. The method (400/500) according to any of claims 1-8, wherein providing (408/512) the notification comprises providing the notification as one or more of a push notification for a mobile application, a text message, an email message, a website, and a web service.

10. The method (400/500) according to any of claims 1-9, wherein the first message and/or the second message comprises an aircraft communications addressing and reporting system ("ACARS") message format.

11. The method (400/500) according to any of claims 1-10, wherein the second message is published and broadcast to systems that subscribe to receive messages that comprise flight information to be input into the flight information system.

12. The method (400/500) according to any of claims 1-11, wherein the step of verifying that the flight information in the first message does not match the flight information in the second message comprises:
comparing the flight information in the first message to the flight information in the second message to determine if the flight information matches; and
storing the compared messages, a comparison result, and/or other properties of the message, including a percent that the flight information in the first message matches the flight information in the second message.

13. A computer program comprising computer program instructions that, when executed by a computer processor, cause the computer processor to perform the method of any of claims 1 to 12.

14. A computer readable medium having stored therein the computer program of claim 13.

15. A computer apparatus (104), comprising:
a computer processor; and
a memory having stored therein a computer program comprising computer program instructions that, when executed by the computer processor, cause the computer processor to perform the method of any of claims 1 to 12.

## Patentansprüche

1. Verfahren (400/500) zum Verifizieren von Fluginformationen, mit den Schritten:
Abrufen (402/504) einer ersten Nachricht, die einem in ein Fluginformationssystem für ein Flugzeug einzugebenden Flug zugeordnete Fluginformation umfasst, wobei die Fluginformation von einem bodengestützten Computer und/oder einem Nachrichtendienst nachverfolgte Statusinformation umfasst, die eine oder mehrere von einer Resttreibstoffmenge, einem Gewicht des Flugzeugs (110), einer Windgeschwindigkeit, einem Luftdruckmesswert und/oder der Geschwindigkeit des Flugzeugs (110) umfasst, und wobei das Fluginformationssystem die Fluginformation verwendet, um Flugeinstellungen für das Flugzeug (110) beizubehalten oder anzupassen;
nach Eingabe der Fluginformation aus der ersten Nachricht in das Fluginformationssystem für das Flugzeug, Abfragen der in das Fluginformationssystem eingegebenen Fluginformation;
Empfangen (404/506) einer zweiten Nachricht, die die dem Flug zugeordnete abgefragte Fluginformation umfasst, die auf der Grundlage der ersten Nachricht in das Fluginformationssystem eingegeben wurde;
Verifizieren (406/508), dass die Fluginformation in der ersten Nachricht nicht mit der Fluginformation in der zweiten Nachricht übereinstimmt, wenn die Fluginformation in der zweiten Nachricht nicht innerhalb eines vorgegebenen Schwellenwerts der Fluginformation in der ersten Nachricht liegt; und
Bereitstellen (408/512) einer Benachrichtigung als Reaktion auf die Verifizierung, dass die Fluginformation in der ersten Nachricht nicht mit der Fluginformation in der zweiten Nachricht übereinstimmt, wobei die Benachrichtigung die Sendezeiten der Nachrichten und einen Status des Flugzeugs zum Zeitpunkt des Sendens der Nachrichten umfasst.

2. Verfahren (400/500) nach Anspruch 1, wobei die Fluginformation ferner mindestens eines umfasst von:
(i) Befehlen oder Maßnahmen, wie Befehlen zur Verringerung oder Erhöhung der Geschwindigkeit des Flugzeugs und/oder Befehlen zur Erhöhung oder Verringerung der Flughöhe des Flugzeugs; und/oder
(ii) Leistungsinitialisierungsdaten und/oder Startreferenzdaten.

3. Verfahren (400/500) nach einem der Ansprüche 1-2, bei dem die erste Nachricht und die zweite Nachricht unterschiedliche Formattypen umfassen, und bei dem das Verfahren das Parsen der ersten Nachricht und der zweiten Nachricht umfasst, um die Fluginformation in der ersten Nachricht und der zweiten Nachricht zu identifizieren, bevor verifiziert wird (406/508), dass die Fluginformation in der ersten Nachricht nicht mit der Fluginformation in der zweiten Nachricht übereinstimmt.

4. Verfahren (400/500) nach Anspruch 3, bei dem das Verifizieren (406/508), dass die Fluginformation in der ersten Nachricht nicht mit der Fluginformation in der zweiten Nachricht übereinstimmt, das Vergleichen der Fluginformation in der ersten Nachricht und der Fluginformation in der zweiten Nachricht auf der Grundlage der Formattypen der ersten Nachricht und der zweiten Nachricht umfasst, um zu bestimmen, ob die Fluginformation der ersten Nachricht und der zweiten Nachricht übereinstimmen.

5. Verfahren (400/500) nach Anspruch 4, welches das Vergleichen der Fluginformation in der ersten Nachricht und der Fluginformation in der zweiten Nachricht auf Bitbasis, Bytebasis, Zeichenbasis, Datenfeldbasis und/oder Nachrichtenbasis umfasst.

6. Verfahren (400/500) nach einem der Ansprüche 1-5, welches das Eingeben der Fluginformation in der ersten Nachricht in das Fluginformationssystem als Reaktion auf den Empfang der ersten Nachricht oder bei Genehmigung der Eingabe der Fluginformation durch einen Benutzer umfasst.

7. Verfahren (400/500) nach Anspruch 6, das ferner umfasst:
Erkennen (502) eines Eingabeereignisses als Reaktion auf die Eingabe der Fluginformation in der ersten Nachricht in das Fluginformationssystem und Abrufen der ersten Nachricht und Empfangen der Fluginformationen in der zweiten Nachricht als Reaktion auf das Eingabeereignis.

8. Verfahren (400/500) nach einem der Ansprüche 1-7, umfassend das Bestimmen (510) eines Typs und eines Zustellungsverfahrens der bereitzustellenden Benachrichtigung auf der Grundlage einer Bedeutung der Fluginformation in der zweiten Nachricht.

9. Verfahren (400/500) nach einem der Ansprüche 1-8, bei dem das Bereitstellen (408/512) der Benachrichtigung das Bereitstellen der Benachrichtigung als Push-Benachrichtigung für eine mobile Anwendung, als Textnachricht, als E-Mail-Nachricht, als Website und/oder als Webdienst umfasst.

10. Verfahren (400/500) nach einem der Ansprüche 1-9, bei dem die erste Nachricht und/oder die zweite Nachricht ein Nachrichtenformat des Flugzeugkommunikationsadressierungs-und -meldesystems (Aircraft Communications Addressing and Reporting System, "ACARS") umfasst.

11. Verfahren (400/500) nach einem der Ansprüche 1-10, bei dem die zweite Nachricht veröffentlicht und an Systeme gesendet wird, die sich für den Empfang von Nachrichten angemeldet haben, die in das Fluginformationssystem einzugebende Fluginformationen umfassen.

12. Verfahren (400/500) nach einem der Ansprüche 1 bis 11, bei dem der Schritt des Verifizierens, dass die Fluginformationen in der ersten Nachricht nicht mit den Fluginformationen in der zweiten Nachricht übereinstimmen, umfasst:
Vergleichen der Fluginformation in der ersten Nachricht mit der Fluginformation in der zweiten Nachricht, um zu bestimmen, ob die Fluginformationen übereinstimmen; und
Speichern der verglichenen Nachrichten, eines Vergleichsergebnisses und/oder anderer Eigenschaften der Nachricht, einschließlich eines Prozentsatzes, zu dem die Fluginformation in der ersten Nachricht mit der Fluginformation in der zweiten Nachricht übereinstimmt.

13. Computerprogramm, das Computerprogrammbefehle umfasst, die bei Ausführung durch einen Computerprozessor bewirken, dass der Computerprozessor das Verfahren nach einem der Ansprüche 1 bis 12 ausführt.

14. Computerlesbares Medium, in dem das Computerprogramm nach Anspruch 13 gespeichert ist.

15. Datenverarbeitungsvorrichtung (104), umfassend:
einen Datenverarbeitungsprozessor; und
einen Speicher, in dem ein Datenverarbeitungsprogramm gespeichert ist, das Datenverarbeitungsprogramm-Befehle umfasst, die bei Ausführung durch den Datenverarbeitungsprozessor bewirken, dass der Datenverarbeitungsprozessor das Verfahren nach einem der Ansprüche 1 bis 12 ausführt.

## Revendications

1. Procédé (400/500) pour vérifier des informations de vol, comprenant les étapes consistant à :
récupérer (402/504) un premier message comprenant des informations de vol associées à un vol qui doit être entré dans un système d'informations de vol pour un aéronef, dans lequel les informations de vol comprennent des informations d'état qui sont suivies à partir d'un ordinateur au sol et/ou d'un service de messagerie comprenant un ou plusieurs parmi : une quantité de carburant restante, un poids de l'aéronef (110), une vitesse de vent, une lecture de pression d'air et/ou la vitesse de l'aéronef (110), et dans lequel le système d'informations de vol utilise les informations de vol pour maintenir ou ajuster des paramètres de vol pour l'aéronef (110) ;
demander, à la suite de l'entrée des informations de vol dans le premier message dans le système d'informations de vol de l'aéronef, le système d'informations de vol sur les informations de vol entrées dans le système d'informations de vol ;
recevoir (404/506) un second message comprenant les informations de vol demandées associées au vol qui a été entré dans le système d'informations de vol sur la base du premier message ;
vérifier (406/508) que les informations de vol dans le premier message ne correspondent pas aux informations de vol dans le second message lorsque les informations de vol dans le second message ne sont pas dans un seuil prédéterminé des informations de vol dans le premier message ; et
fournir (408/512) une notification en réponse à la vérification que les informations de vol dans le premier message ne correspondent pas aux informations de vol dans le second message, la notification comprenant les instants où les messages ont été envoyés et un état de l'aéronef lorsque les messages ont été envoyés.

2. Procédé (400/500) selon la revendication 1, dans lequel les informations de vol comprennent en outre au moins certaines parmi :
(i) des instructions ou des actions, telles que des instructions pour réduire ou augmenter la vitesse de l'aéronef et/ou des instructions pour augmenter ou réduire l'altitude de l'aéronef ; et/ou
(ii) des données d'initialisation de performance et/ou des données de référence de décollage.

3. Procédé (400/500) selon l'une quelconque des revendications 1 à 2, dans lequel le premier message et le second message comprennent des types de format différents, et dans lequel le procédé comprend une analyse du premier message et du second message pour identifier les informations de vol dans le premier message et le second message avant de vérifier (406/508) que les informations de vol dans le premier message ne correspondent pas aux informations de vol dans le second message.

4. Procédé (400/500) selon la revendication 3, dans lequel la vérification (406/508) que les informations de vol dans le premier message ne correspondent pas aux informations de vol dans le second message comprend une comparaison des informations de vol dans le premier message et des informations de vol dans le second message sur la base des types de format du premier message et du second message afin de déterminer si les informations de vol du premier message et du second message correspondent.

5. Procédé (400/500) selon la revendication 4, comprenant une comparaison des informations de vol dans le premier message et des informations de vol dans le second message sur une ou plusieurs parmi une base par bit, une base par octet, une base par caractère, une base par champ de données, et une base par message.

6. Procédé (400/500) selon l'une quelconque des revendications 1 à 5, comprenant l'étape consistant à entrer les informations de vol dans le premier message dans le système d'informations de vol en réponse à la réception du premier message ou lorsqu'un utilisateur approuve l'entrée des informations de vol.

7. Procédé (400/500) selon la revendication 6, comprenant en outre les étapes consistant à détecter (502) un événement d'entrée en réponse aux informations de vol dans le premier message entré dans le système d'informations de vol, et récupérer le premier message et recevoir les informations de vol dans le second message en réponse à l'événement d'entrée.

8. Procédé (400/500) selon l'une quelconque des revendications 1 à 7, comprenant l'étape consistant à déterminer (510) un type et un procédé de délivrance de la notification à fournir sur la base d'une signification des informations de vol dans le second message.

9. Procédé (400/500) selon l'une quelconque des revendications 1 à 8, dans lequel la fourniture (408/512) de la notification comprend une fourniture de la notification sous la forme d'une ou plusieurs parmi une notification push pour une application mobile, un message texte, un message électronique, un site Web et un service Web.

10. Procédé (400/500) selon l'une quelconque des revendications 1 à 9, dans lequel le premier message et/ou le second message comprend un format de message de système d'adressage et de rapport de communications d'aéronef ("ACARS").

11. Procédé (400/500) selon l'une quelconque des revendications 1 à 10, dans lequel le second message est publié et diffusé à des systèmes qui s'abonnent pour recevoir des messages qui comprennent des informations de vol à entrer dans le système d'informations de vol.

12. Procédé (400/500) selon l'une quelconque des revendications 1 à 11, dans lequel l'étape de vérification que les informations de vol dans le premier message ne correspondent pas aux informations de vol dans le second message comprend les étapes consistant à :
comparer les informations de vol dans le premier message aux informations de vol dans le second message pour déterminer si les informations de vol correspondent ; et
stocker les messages comparés, un résultat de comparaison et/ou d'autres propriétés du message, y compris un pourcentage selon lequel les informations de vol dans le premier message correspondent aux informations de vol dans le second message.

13. Programme informatique comprenant des instructions de programme informatique qui, lorsqu'elles sont exécutées par un processeur informatique, amènent le processeur informatique à exécuter le procédé selon l'une quelconque des revendications 1 à 12.

14. Support lisible par ordinateur sur lequel est stocké le programme informatique selon la revendication 13.

15. Appareil informatique (104), comprenant :
un processeur informatique ; et
une mémoire ayant un programme informatique comprenant des instructions de programme informatique qui, lorsqu'elles sont exécutées par le processeur informatique, amènent le processeur informatique à exécuter le procédé selon l'une quelconque des revendications 1 à 12.
